# EUROPÄISCHE PATENTSCHRIFT

(11) **EP 3 516 115 B1**
(45) Veröffentlichungstag und Bekanntmachung des Hinweises auf die Patenterteilung: **03.03.2021**
(21) Anmeldenummer: 17754613.2
(22) Anmeldetag: 21.08.2017
(51) Int. Cl.: E01B 29/24, E01B 31/02

(54) **MANUELL AUF EINEM GLEIS VERSCHIEBBARE MASCHINE ZUR GLEISBEARBEITUNG**
TRACK-WORKING MACHINE WHICH CAN BE DISPLACED MANUALLY ON A TRACK
MACHINE POUVANT COULISSER MANUELLEMENT SUR UNE VOIE FERRÉE POUR LE TRAVAIL DE RAILS

(30) Priorität: 22.09.2016 DE 202016005841 U
(43) Veröffentlichungstag der Anmeldung: 31.07.2019
(73) Patentinhaber: Robel Bahnbaumaschinen GmbH, 83395 Freilassing (DE)
(72) Erfinder: WIDLROITHER, Otto, 83395 Freilassing (DE)
(74) Vertreter: Rau, Schneck & Hübner Patentanwälte Rechtsanwälte PartGmbB
(86) Internationale Anmeldenummer: PCT/EP2017/001001
(87) Internationale Veröffentlichungsnummer: WO 2018/054519

(56) Entgegenhaltungen:
- EP-A1- 0 576 891
- WO-A1-2006/058552
- WO-A1-2017/017432
- CN-U- 203 420 190
- DE-U1-202012 007 818

## Beschreibung

### Gebiet der Technik

Die Erfindung betrifft eine manuell auf einem Gleis verschiebbare Maschine zur Gleisbearbeitung, mit einem Arbeitsmodul, das einen Handgriff, ein mit einem mit elektrischer Energie aus einem Energiespeicher versorgten Elektromotor ausgebildeten Antrieb angetriebenes Arbeitswerkzeug und einen auf einer Schiene des Gleises führbaren Maschinenrahmen umfasst, wobei das Arbeitsmodul lösbar mit einem den elektrischen Energiespeicher und Ausgangskontakte umfassenden Energiemodul verbunden ist und dass die Ausgangskontakte lösbar mit Eingangskontakten des Arbeitsmoduls verbunden sind.

### Stand der Technik

Eine derartige per Hand am Gleis führbare Kleinmaschine ist flexibel und rasch einsetzbar. Ihr Gewicht ist begrenzt, um einen einfachen Transport zwischen einzelnen Gleisbaustellen sicherzustellen. Das Heben auf ein Gleis oder vom Gleis erfolgt in der Regel durch zwei Personen mittels ergonomisch angeordneter Handgriffe.

Beispielsweise kennt man aus der DE 20 2010 007 264 U1 eine Schleifmaschine zum Schienenkopfschleifen. Als Antrieb kommt hier ein Verbrennungsmotor zum Einsatz, der in einem Maschinenrahmen befestigt ist. Gegenüber dem Maschinenrahmen ist ein Arbeitsmodul schwenkbar angeordnet, wobei ein Schleifaggregat über eine flexible Antriebswelle mit dem Verbrennungsmotor verbunden ist.

Eine modular aufgebaute Kleinmaschine ist aus der DE 20 1012 007 818 U1 bekannt. Diese manuell am Gleis verschiebbare Maschine umfasst ein Arbeitsmodul mit einem hydraulischen Antrieb zum Betreiben eines Arbeitswerkzeugs. Daran lösbar gekoppelt ist ein Energiemodul, das einen Verbrennungsmotor und eine Hydraulikpumpe umfasst. Der Verbrennungsmotor muss dabei so ausgelegt sein, dass er die zum Betreiben des Arbeitswerkzeugs erforderliche maximale Leistung liefert. Diese ist jedoch in der Regel während eines Arbeitszyklus nur kurzzeitig erforderlich, beispielsweise beim Festklemmen einer Clipverbindung oder beim Festziehen einer Befestigungsschraube.

Weitere gleisverfahrbare Maschinen zur Gleisbearbeitung sind aus CN 203420190 U, EP 0 576 891 A1 sowie WO 2017/017432 A1 bekannt. Diese weisen Energiespeicher zur Versorgung von Antrieben für Arbeitswerkzeuge auf.

### Zusammenfassung der Erfindung

Der Erfindung liegt die Aufgabe zugrunde, für eine Maschine der eingangs genannten Art eine Verbesserung gegenüber dem Stand der Technik anzugeben.

Erfindungsgemäß wird diese Aufgabe gelöst durch eine Maschine mit den Merkmalen des unabhängigen Anspruchs 1. Abhängige Ansprüche geben vorteilhafte Ausgestaltungen der Erfindung an.

Dabei umfasst das Energiemodul einen mit einem Generator gekoppelten Verbrennungsmotor und der Generator ist mit einer Ladeeinrichtung zum Aufladen des elektrischen Energiespeichers verbunden. Eine derartige Lösung ist einerseits ergonomisch aufgrund der getrennten Transportmöglichkeit von Arbeitsmodul und Energiemodul. Andererseits besteht ein hoher Gesamtwirkungsgrad, weil die im Energiespeicher zur Verfügung stehende Energie zum größten Teil zur Abdeckung von Leistungsspitzen dient. Es kommt zu keinen Leerlaufzeiten des Antriebs, wie dies bei bekannten Maschinen mit mechanisch oder hydraulisch angetriebenem Arbeitswerkzeug der Fall ist.

Damit ist die Dimensionierung des Energiespeichers und des Verbrennungsmotors auf die während eines Arbeitszyklus erforderliche elektrische Energie abgestimmt. Konkret liefert der Verbrennungsmotor eine durchschnittliche Leistung, wobei Energie im Energiespeicher zwischengespeichert wird und zur Abdeckung von Leistungsspitzen bereitsteht.

Für eine effiziente Handhabung der Maschine ist es von Vorteil, wenn die Eingangskontakte in einer mechanischen Aufnahmeeinrichtung des Arbeitsmoduls integriert sind und wenn die Ausgangskontakte in einer mechanischen Anschlusseinrichtung des Energiemoduls integriert sind. Auf diese Weise erfolgt eine elektrische Kontaktierung gleichzeitig mit einem mechanischen Zusammenkuppeln von Arbeits- und Energiemodul.

Bei einer vorteilhaften Weiterbildung des Energiemoduls umfasst der elektrische Energiespeicher einen Superkondensator. Damit ist eine hohe Leistungsdichte auf geringem Raum und bei geringem Gewicht erzielbar. Zudem erlaubt ein Superkondensator eine schnelle Entladung und ausreichend viele Lade- und Entladezyklen, wodurch ein Maschinenbetrieb mit wiederkehrenden sprunghaft ansteigenden Leistungsspitzen optimal unterstützt wird.

Des Weiteren ist es sinnvoll, wenn der elektrische Energiespeicher einen Akkumulator umfasst. Auf diese Weise wird elektrische Energie für eine längere Maschinenbetriebsdauer zwischengespeichert. Bei geeigneter Dimensionierung des Akkumulators kann eine versorgende Verbrennungsmotor-Generator-Einheit zwischenzeitliche abgeschaltet werden (z.B. in Tunnel) oder gänzlich entfallen, wenn der Akkumulator in Arbeitspausen mittels einer externen Quelle aufgeladen oder ausgetauscht wird.

In einer Weiterbildung des Erfindungsgegenstandes sind die Eingangskontakte verbunden mit einer Verteilereinrichtung, an deren Ausgang der Elektromotor angeschlossen ist. Somit ist die Ansteuerung des Elektromotors im Arbeitsmodul integriert. Über die Eingangskontakte erfolgt eine Versorgung mit Gleichstrom aus dem elektrischen Energiespeicher.

Dabei ist es günstig, wenn der Antrieb als bürstenloser Elektromotor ausgebildet ist. Ein derartiger Elektromotor ist einerseits wartungsarm und andererseits in einfacher Weise mittels eines Frequenzumrichters ansteuerbar.

Eine weitere Verbesserung sieht vor, dass das Arbeitsmodul mit dem Energiemodul über eine lösbare Datenleitung verbunden ist. Damit können Zustandsdaten des Energiemoduls an eine Anzeigeeinrichtung des Arbeitsmoduls übertragen werden. Auch die Übertragung von Steuerungsdaten ist damit möglich.

Für eine besonders effiziente Maschine ist es von Vorteil, wenn der Energiespeicher eine Kapazität aufweist, bei der die für einen Arbeitszyklus der Maschine notwendige Energie mit einer annähernd konstanten Leistung des Verbrennungsmotors abgedeckt ist. Dann arbeitet der Verbrennungsmotor immer in einem optimalen Bereich mit geringster Lärmemission und niedrigstem Kraftstoffverbrauch.

Zudem ist es günstig, wenn die Maschine eine als speicherprogrammierbare Steuerung ausgebildete Maschinensteuerung umfasst. Neben einer anpassbaren Motoransteuerung können damit auch Zusatzfunktionen umgesetzt werden.

Bei einer vorteilhaften Ausprägung der Maschine als Schleifmaschine umfasst das Arbeitsmodul eine Schleifeinrichtung zum Schleifen der Schiene. Insbesondere bei gegenüber dem Maschinenrahmen kippbaren Schleifeinrichtungen ist diese Ausprägung sinnvoll, weil dann der Antrieb in die Schleifeinrichtung integrierbar ist. Die Versorgung erfolgt über flexible elektrische Leitungen, die ein weitgehend freies Kippen der Schleifeinrichtung erlauben.

Eine andere Ausprägung der Maschine sieht vor, dass das Arbeitsmodul eine Schraub- oder Clipeinrichtung zum Lösen und Fixieren von Schienenbefestigungen des Gleises umfasst. Hierbei wird insbesondere die zyklische Arbeitsweise unterstützt, bei der wiederholt nur kurzzeitige Lastspitzen auftreten. Diese Lastspitzen werden mit der zwischengespeicherten Energie aus dem elektrischen Energiespeicher abgedeckt.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Schienengeführte Schleifmaschine
- Fig. 2: Querausleger der Maschine gemäß Fig. 1 mit Energiemodul
- Fig. 3: Schaltungsaufbau
- Fig. 4: Schienengeführte Schraubmaschine

### Beschreibung der Ausführungsformen

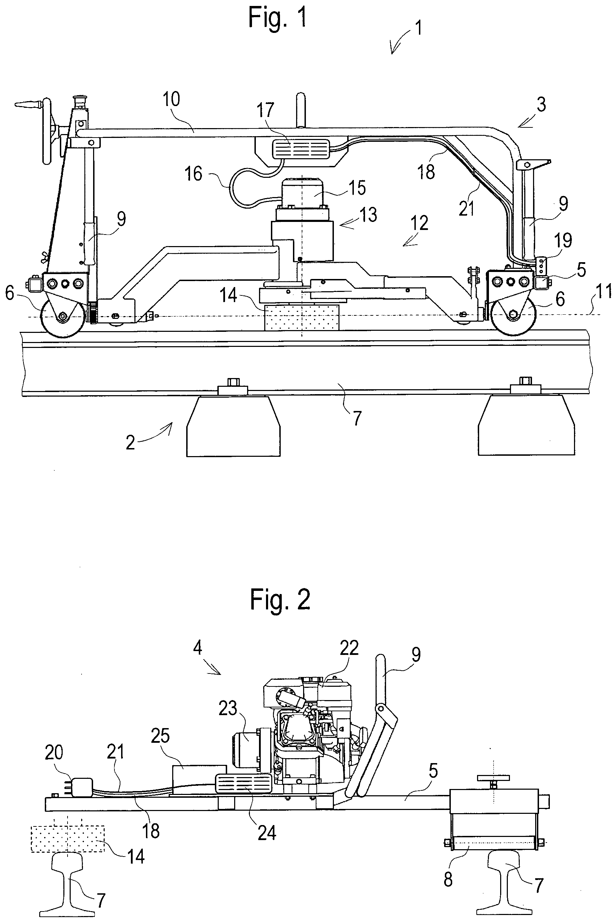

Die in Fig. 1 dargestellte Maschine 1 zur Bearbeitung eines Gleises 2 ist eine manuell geführte Schleifmaschine. Diese umfasst ein Arbeitsmodul 3 und ein Energiemodul 4, welches in Fig. 2 ersichtlich ist. Mechanisch lösbar verbunden sind die beiden Module 3, 4 über einen Querausleger 5. Die Maschine 1 ist mit Führungsrollen 6 in einer Schiene 7 des Gleises 2 geführt und über den Querausleger 5 mit einer daran befestigten Rolle 8 gegenüber der anderen Schienen 7 des Gleises 2 abgestützt.

Das Arbeitsmodul 3 umfasst Handgriffe 9, die an einem Maschinenrahmen 10 angeordnet sind. Mittels dieser Handgriffe 9 ist die Maschine 1 ein- bzw. ausgleisbar. Im Maschinenrahmen 10 ist um eine in Längsrichtung des Gleises 2 verlaufende Schwenkachse 11 eine Schleifeinrichtung 12 kippbar angeordnet. Dieses umfasst einen Antrieb 13 zum Antreiben eines Arbeitswerkzeugs 14, das im vorliegenden Beispiel als Schleifscheibe ausgebildet ist. Durch manuelles Verschieben der Maschine 1 entlang des Gleises 2 und Kippen um die Schwenkachse 11 ist eine Kontur des Schienenkopfes der einen Schiene 7 schleifbar.

Der Antrieb 13 ist als bürstenloser Elektromotor 15 ausgebildet. Über eine flexible Motoranschlussleitung 16 ist dieser mit einer Verteilereinrichtung 17 verbunden. In dieser Verteilereinrichtung 17 ist die Ansteuerung des Elektromotors 15 untergebracht. Zugeführt ist der Verteilereinrichtung 17 eine Versorgungsleitung 18, die mit Eingangskontakten 19 des Arbeitsmoduls 3 verbunden ist.

Die Versorgungsleitung 18 ist über Ausgangskontakte 20 zum Energiemodul 4 weitergeführt. Optional verläuft parallel zur Versortungsleitung 18 eine Datenleitung 21, um zwischen Arbeitsmodul 3 und Energiemodul 4 Zustandsdaten oder Steuerungsdaten zu übertragen. Günstigerweise sind die Eingangskontakte 19 und Ausgangskontakte 20 als Elemente einer lösbaren Steckverbindung ausgebildet.

Das Energiemodul 4 ist am Querausleger 5 befestigt und umfasst einen Verbrennungsmotor 22, einen Generator 23, eine Ladeeinrichtung 24 und einen elektrischen Energiespeicher 25. Letzterer ist vorzugsweise ein sogenannter Superkondensator 26. Es kann auch sinnvoll sein, alternativ dazu oder zusätzlich einen Akkumulator 27 anzuordnen. Zum Heben des Energiemoduls 4 sind zudem ergonomisch angeordnete Handgriffe 9 vorgesehen.

In einer nicht dargestellten alternativen Ausbildung kann das Energiemodul 4 lediglich mittels ausrechend langer flexibler Leitungen 18, 21 mit dem Arbeitsmodul 3 verbunden sein. Das Energiemodul 4 wird dann beispielsweise während eines Schleifvorgangs neben dem Gleis abgestellt.

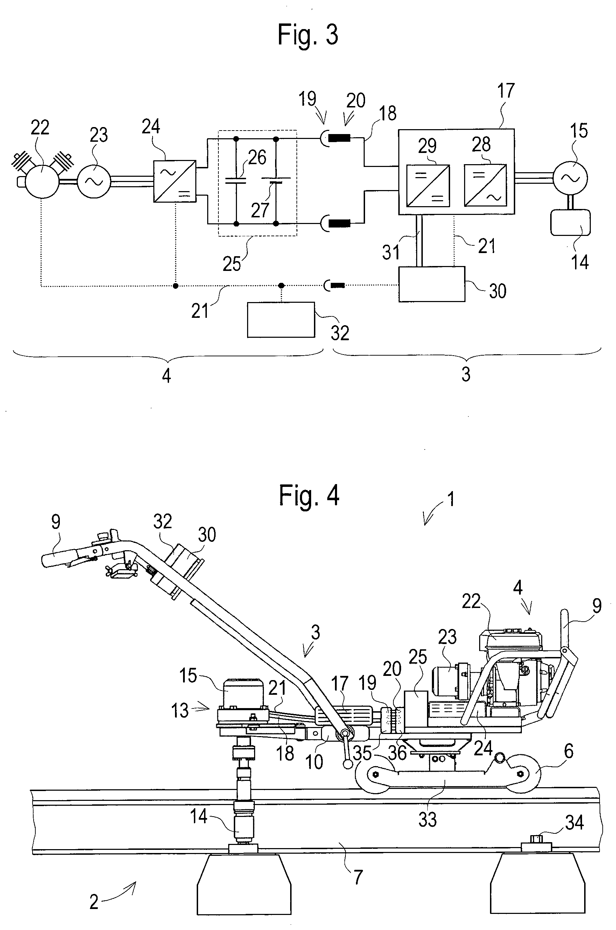

In Fig. 3 ist ein Schaltungsaufbau dargestellt. Der Verbrennungsmotor 22 ist mechanisch mit dem Generator 23 gekoppelt. Ein mittels Generator 23 erzeugter Drehstrom ist der Ladeeinrichtung 24 zugeführt. Diese umfasst beispielsweise einen Schaltwandler zur Erzeugung einer geregelten ausgangsseitigen Gleichspannung (Ladespannung).

Als Energiespeicher 25 liegt an der Gleichspannung der Superkondensator 26 und gegebenenfalls der Akkumulator 27 an. Bei einer Parallelschaltung dient der Superkondensator 26 als Pufferelement zur Abdeckung sprunghaft ansteigender Lastspitzen, wobei eine Wiederaufladung mittels Ladeeinrichtung 24 erfolgt. Bei abgeschaltetem oder fehlendem Verbrennungsmotor 22 wird die Energie zum Aufladen des Superkondensators 26 vom Akkumulator 27 bereitgestellt.

Über die Kontakte 19, 20 der Versorgungsleitung 18 ist die gespeicherte elektrische Energie der Verteilereinrichtung 17 des Arbeitsmoduls 3 zugeführt. Dort erfolgt eine Umwandlung der Gleichspannung zur Ansteuerung des Elektromotors 15. Beispielsweise handelt es sich dabei um einen sogenannten bürstenlosen Gleichstrommotor. Tatsächlich ist dieser wie eine Drehstrom-Synchronmaschine mit Erregung durch Permanentmagnete aufgebaut. Zur Umwandlung der Gleichspannung dient ein vereinfachter Frequenzumrichter 28 mit Blockkommutierung. Bei der dargestellten Schleifmaschine ist die Möglichkeit gegeben, den Antrieb 13 direkt in die Schleifspindel zu integrieren.

Alternativ dazu kann ein herkömmlicher Gleichstrommotor mit Bürsten zur Anwendung kommen, wobei die Notwendigkeit eines Frequenzumrichters 28 entfällt. Fallweise ist die Anordnung eines Kraftübertragungselements zwischen Elektromotor 15 und dem Arbeitswerkzeug 14 sinnvoll, um eine optimale Drehzahl des Arbeitswerkzeugs 14 an eine Drehzahl des Elektromotors 15 anzupassen.

Die Verteilereinrichtung 17 umfasst zusätzlich einen Gleichspannungswandler 29 zur Umwandlung der eingangsseitigen Gleichspannung (z.B. 43 Volt) in eine Versorgungsspannung (z.B. 12 Volt Gleichspannung). Über eine zweiphasige Leitung 31 ist eine Maschinensteuerung 30 an die Versorgungsspannung angeschlossen. Zusätzlich besteht eine Verbindung mittels Datenleitung 21, um zwischen Maschinensteuerung 30 und Verteilereinrichtung 17 Steuer- und Zustandsdaten auszutauschen. Sinnvollerweise handelt es sich um eine speicherprogrammierbare Steuerung (SPS), die zur Regelung des Elektromotors 15 und zur Verarbeitung der Zustandsdaten eingerichtet ist. Auch Zusatzfunktionen wie beispielsweise eine elektrische Spindelverstellung sind damit umsetzbar.

Über eine lösbare Datenleitung 21 ist die Maschinensteuerung 30 mit einem Bedienteil 32 der Maschine 1 und gegebenenfalls mit der Ladeeinrichtung 24 und dem Verbrennungsmotor 22 verbunden. Damit ist die Leistung des Elektromotors 15 auf die mittels Ladeeinrichtung 24 während eines Arbeitszyklus bereitgestellte Energie abstimmbar. Das Bedienteil 32 kann auch als Element des Arbeitsmoduls 3 ausgebildet und direkt mit der Maschinensteuerung 30 verbunden sein. Günstigerweise umfasst das Bedienteil 32 ein Display oder Leuchtdioden zur Anzeige der im Energiespeicher 25 gespeicherten elektrischen Energie.

Ein weiteres Maschinenbeispiel ist in Fig. 4 dargestellt. Dabei handelt es sich um eine Schraubmaschine, dessen Arbeitswerkzeug 14 als Schraubspindel ausgebildet ist. Mittels Führungsrollen 6 ist die Maschine 1 am Gleis 2 geführt. Die Führungsrollen 6 sind Elemente eines Fahrwerks 33, das mit dem Maschinenrahmen 10 beweglich verbunden ist. Auf diese Weise ist der Maschinenrahmen 10 mittels Handgriffe 9 verschwenkbar, um die Schraubspindel mit Schrauben der Schienenbefestigungen 34 in Eingriff zu bringen.

Am Maschinenrahmen 10 ist das Arbeitsmodul 3 aufgebaut, das neben dem Antrieb 13 und dem Arbeitswerkzeug 14 auch das Bedienteil 32, die Maschinesteuerung 30 und die Verteilereinrichtung 17 umfasst. Eingangskontakte 19 des Arbeitsmoduls 3 sind mit Ausgangkontakten 20 des Energiemoduls 4 zusammengesteckt.

Dabei ist es günstig, wenn das Energiemodul 4 mit dem Arbeitsmodul 3 mittels einer mechanischen Kuppelvorrichtung verbunden ist und wenn die Eingangs- und Ausgangskontakte 19, 20 Elemente dieser Kuppelvorrichtung sind. Auf diese Weise erfolgt die elektrische Kontaktierung automatisch beim Zusammenkuppeln von Arbeits- und Energiemodul 3, 4. Konkret sind dabei die Eingangskontakte 19 in einer mechanischen Aufnahmeeinrichtung 35 des Arbeitsmoduls 3 und die Ausgangskontakte 20 in eine mechanische Anschlusseinrichtung 36 des Energiemoduls 4 integriert.

Über die zusammengesteckte Versorgungsleitung 18 erfolgt die Versorgung des Arbeitsmoduls 3 aus dem Energiespeicher 25. Zusätzlich ist eine lösbare Datenleitung 21 zur Übertragung von Steuerungs- und Zustandsdaten zwischen dem Bedienteil 32 bzw. der Maschinensteuerung 30 und dem Energiemodul 4 vorgesehen.

Neben der beschriebenen handgeführten Schleifmaschine und der handgeführten Schraubmaschinen sind auch andere Maschinen 1 von der vorliegenden Erfindung erfasst, beispielsweise eine Clipmaschine oder eine Maschine zum Trennen von Schienen 7. Insbesondere bei Maschinen 1 mit in der Regel kurzen Arbeitseinsätzen kann es sinnvoll sein, das Energiemodul 4 mit einem Energiespeicher 25 vorzusehen, der in Arbeitspausen mittels einer externen Energiequelle aufgeladen wird. Dann entfallen der Verbrennungsmotor 22 und der Generator 23.

Bei allen Anwendungen mit Verbrennungsmotor 22 können Generator 23 und Elektromotor 15 weitgehend baugleich ausgebildet sein. Beispielsweise handelt es sich bei beiden um bürstenlose elektrische Maschinen, wobei der Generator 23 an einen Gleichrichter (als Teil der Ladeeinrichtung 24) und der Elektromotor 15 an den Frequenzumrichter 28 angeschlossen ist.

Die Kapazität des Energiespeichers 25 ist vorteilhafterweise so ausgelegt, dass die für einen Arbeitszyklus der Maschine 1 notwendige Energie mit einer konstanten Leistung des Verbrennungsmotors 22 abgedeckt ist. Ein Arbeitszyklus setzt sich dabei aus passiven Phasen mit nicht im Einsatz befindlichem Arbeitswerkzeug 14 und aus aktiven Phasen mit laufendem Arbeitswerkzeug 14 zusammen. Eine Aufladung des Energiespeichers 25 erfolgt während einer passiven Phase und eine Entladung während einer aktiven Phase.

In einer Weiterentwicklung ist es sinnvoll, die zum Betreiben der Maschine 1 notwendige Energie über mehrere Arbeitszyklen hinweg zu erfassen. Beispielsweise wird der Leistungsverlauf des Elektromotors 15 gemessen und in einer Speichereinheit der Maschinensteuerung 30 abgespeichert. Nachfolgend dient ein Mittelwert als Leistungsvorgabe für den Verbrennungsmotor 22. Auf diese Weise wird der Verbrennungsmotor 22 auch bei unterschiedlichen Arbeitsbedingungen immer in einem optimalen Leistungsbereich betrieben. Bei längeren Arbeitszykluszeiten kann beispielsweise die Motordrehzahl automatisch gesenkt werden, um Lärm und Kraftstoffverbrauch zu reduzieren.

## Patentansprüche

1. Manuell auf einem Gleis (2) verschiebbare Maschine (1) zur Gleisbearbeitung, mit einem Arbeitsmodul (3), das einen Handgriff (9), ein mit einem mit elektrischer Energie aus einem Energiespeicher (25) versorgten Elektromotor (15) ausgebildeten Antrieb (13) angetriebenes Arbeitswerkzeug (14) und einen auf einer Schiene (7) des Gleises (2) führbaren Maschinenrahmen (10) umfasst, wobei das Arbeitsmodul (3) lösbar mit einem den elektrischen Energiespeicher (25) und Ausgangskontakte (20) umfassenden Energiemodul (4) verbunden ist, dass die Ausgangskontakte (20) lösbar mit Eingangskontakten (19) des Arbeitsmoduls (3) verbunden sind, **dadurch gekennzeichnet, dass** das Energiemodul (4) einen mit einem Generator (23) gekoppelten Verbrennungsmotor (22) umfasst und dass der Generator (23) mit einer Ladeeinrichtung (24) zum Aufladen des elektrischen Energiespeichers (25) verbunden ist.

2. Maschine (1) nach Anspruch 1, **dadurch gekennzeichnet, dass** die Eingangskontakte (19) in einer mechanischen Aufnahmeeinrichtung (35) des Arbeitsmoduls (3) integriert sind und dass die Ausgangskontakte (20) in einer mechanischen Anschlusseinrichtung (36) des Energiemoduls (4) integriert sind.

3. Maschine (1) nach einem der Ansprüche 1 oder 2, **dadurch gekennzeichnet, dass** der elektrische Energiespeicher (25) einen Superkondensator (26) umfasst.

4. Maschine (1) nach einem der Ansprüche 1 bis 3, **dadurch gekennzeichnet, dass** der elektrische Energiespeicher (25) einen Akkumulator (27) umfasst.

5. Maschine (1) nach einem der Ansprüche 1 bis 4, **dadurch gekennzeichnet, dass** die Eingangskontakte (19) verbunden sind mit einer Verteilereinrichtung (17), an deren Ausgang der Elektromotor (15) angeschlossen ist.

6. Maschine (1) nach einem der Ansprüche 1 bis 5, **dadurch gekennzeichnet, dass** der Antrieb (13) als bürstenloser Elektromotor (15) ausgebildet ist.

7. Maschine (1) nach einem der Ansprüche 1 bis 6, **dadurch gekennzeichnet, dass** das Arbeitsmodul (3) mit dem Energiemodul (4) über eine lösbare Datenleitung (21) verbunden ist.

8. Maschine (1) nach einem der Ansprüche 1 bis 7, **dadurch gekennzeichnet, dass** der Energiespeicher (25) eine Kapazität aufweist, bei der die für einen Arbeitszyklus der Maschine (1) notwendige Energie mit einer annähernd konstanten Leistung des Verbrennungsmotors (22) abgedeckt ist.

9. Maschine (1) nach einem der Ansprüche 1 bis 8, **dadurch gekennzeichnet, dass** die Maschine (1) eine als speicherprogrammierbare Steuerung ausgebildete Maschinensteuerung (30) umfasst.

10. Maschine (1) nach einem der Ansprüche 1 bis 9, **dadurch gekennzeichnet, dass** das Arbeitsmodul (3) eine Schleifeinrichtung (12) zum Schleifen der Schiene (7) umfasst.

11. Maschine (1) nach einem der Ansprüche 1 bis 9, **dadurch gekennzeichnet, dass** das Arbeitsmodul (3) eine Schraub- oder Clipeinrichtung zum Lösen und Fixieren von Schienenbefestigungen (34) des Gleises (2) umfasst.

## Claims

1. Machine (1) for track maintenance, manually displaceable on a track (2), which has a work module (3) comprising a handle (9), a working tool (14) powered by a drive (13) designed as an electric motor (15) supplied with electrical energy from an energy store (25) and a machine frame (10) designed to be guided on a rail (7) of the track (2), wherein the work module (3) is detachably connected to an energy module (4) comprising the electrical energy store (25) and output contacts (20), that the output contacts (20) are detachably connected to input contacts (19) of the work module (3), **characterized in that** the energy module (4) comprises a combustion engine (22) coupled to a generator (23), and that the generator (23) is connected to a charging device (24) for charging the electrical energy store (25).

2. Machine (1) according to claim 1, **characterized in that** the input contacts (19) are integrated in a mechanical receiving device (35) of the work module (3), and that the output contacts (20) are integrated in a mechanical connecting device (36) of the energy module (4).

3. Machine (1) according to one of claims 1 or 2, **characterized in that** the electrical energy store (25) comprises a super capacitor (26).

4. Machine (1) according to one of claims 1 to 3, **characterized in that** the electrical energy store (25) comprises an accumulator (27).

5. Machine (1) according to one of claims 1 to 4, **characterized in that** the input contacts (19) are connected to a distributing device (17), to the output of which the electric motor (15) is connected.

6. Machine (1) according to one of claims 1 to 5, **characterized in that** the drive (13) is designed as a brushless electric motor (15).

7. Machine (1) according to one of claims 1 to 6, **characterized in that** the work module (3) is connected to the energy module (4) via a detachable data cable (21).

8. Machine (1) according to one of claims 1 to 7, **characterized in that** the energy store (25) has a capacity with which the energy required for a work cycle of the machine (1) is covered with an approximately constant performance of the combustion engine (22).

9. Machine (1) according to one of claims 1 to 8, **characterized in that** the machine (1) comprises a machine control (30) designed as a memory-programmable control.

10. Machine (1) according to one of claims 1 to 9, **characterized in that** the work module (3) comprises a grinding device (12) for grinding the rail (7).

11. Machine (1) according to one of claims 1 to 9, **characterized in that** the work module (3) comprises a screwing- or clipping device for detaching and affixing rail fastenings (34) of the track (2).

## Revendications

1. Machine (1) pouvant coulisser manuellement sur une voie ferrée (2) pour le travail de rails, avec un module de travail (3) comprenant une poignée (9), un outil de travail (14) entraîné par un entraînement (13) conçu avec un moteur électrique (15) alimenté par de l'énergie électrique venant d'un réservoir d' énergie (25) et un bâti de machine (10) pouvant être guidé sur un rail (7) de la voie ferrée (2), le module de travail (3) étant relié de manière détachable avec un module d'énergie (4) comprenant le réservoir d'énergie (25) et des contacts de sortie (20), que les contacts de sortie (20) sont reliés de manière détachable avec des contacts d'entrée (19) du module de travail (3), **caractérisé en ce que** le module d'énergie (4) comprends un moteur à combustion (22) couplé à un générateur (23) et que le générateur (23) et relié à un dispositif de charge (24) pour charger le réservoir électrique (25).

2. Machine (1) selon la revendication 1, **caractérisé en ce que** les contacts d'entrée (19) sont intégrés dans un dispositif mécanique de logement (35) du module de travail (3) et que les contacts de sortie (20) sont intégrés dans un dispositif mécanique de connexion (36) du module d'énergie (4).

3. Machine (1) selon l'une quelconque des revendications 1 ou 2, **caractérisé en ce que** le réservoir d'énergie électrique (25) comprend un supercondensateur (26).

4. Machine (1) selon l'une quelconque des revendications 1 à 3, **caractérisé en ce que** le réservoir d'énergie électrique (25) comprend un accumulateur (27).

5. Machine (1) selon l'une quelconque des revendications 1 à 4, **caractérisé en ce que** les contacts d'entrée (19) sont reliés à un dispositif de distribution (17), à la sortie duquel le moteur électrique (15) est branché.

6. Machine (1) selon l'une quelconque des revendications 1 à 5, **caractérisé en ce que** l'entraînement (13) est conçu comme moteur électrique (15) sans balais.

7. Machine (1) selon l'une quelconque des revendications 1 à 6, **caractérisé en ce que** le module de travail (3) est relié au module d'énergie (4) via une ligne de données (21) détachable.

8. Machine (1) selon l'une quelconque des revendications 1 à 7, **caractérisé en ce que** le réservoir d'énergie (25) présente une capacité à laquelle l'énergie nécessaire pour un cycle de service de la machine (1) est couverte par une performance approximativement constante du moteur de combustion (22).

9. Machine (1) selon l'une quelconque des revendications 1 à 8, **caractérisé en ce que** la machine (1) comprend une commande de machines (30) conçue comme un automate programmable à mémoire.

10. Machine (1) selon l'une quelconque des revendications 1 à 9, **caractérisé en ce que** le module de travail (3) comprend un dispositif de meulage (12) pour meuler le rail (7).

11. Machine (1) selon l'une quelconque des revendications 1 à 9, **caractérisé en ce que** le module de travail (3) comprend un dispositif de vissage ou de clippage pour desserrer et fixer les attaches des rails (34) de la voie ferrée (2).
